Europäisches Patentamt

European Patent Office

Office européen des brevets

(19)

(11) Numéro de publication : **0 124 409**
**B1**

(12)                          FASCICULE DE BREVET EUROPÉEN

(45) Date de publication du fascicule du brevet :
22.10.86

(21) Numéro de dépôt : **84400732.8**

(22) Date de dépôt : **12.04.84**

(51) Int. Cl.⁴ : **C 02 F   3/28, B 01 J   8/20**

(54) **Procédé et dispositif de régénération d'un ensemble de particules solides à enrobage en matière biologique.**

(30) Priorité : **28.04.83 FR 8307016**

(43) Date de publication de la demande :
**07.11.84 Bulletin 84/45**

(45) Mention de la délivrance du brevet :
**22.10.86 Bulletin 86/43**

(84) Etats contractants désignés :
**AT BE CH DE FR GB IT LI LU NL SE**

(56) Documents cités :
**EP-A- 0 053 772
NL-A- 7 305 182
NL-A- 7 314 808
US-A- 3 855 120
US-A- 4 055 490
"Biological fluidised bed treatment of water and
wastewater", 1981, éditeurs P.F. Cooper et al., publ.
Ellis Horwood Ltd., Chichster, GB;**

(73) Titulaire : **L'AIR LIQUIDE, SOCIETE ANONYME POUR
L'ETUDE ET L'EXPLOITATION DES PROCEDES
GEORGES CLAUDE
75, Quai d'Orsay
F-75321 Paris Cedex 07 (FR)**

(72) Inventeur : **Rigouard, Alain
12, Allée François Villon Domaine Jean Jaurès
F-38130 Echirolles (FR)**

(74) Mandataire : **Leclercq, Maurice et al
L'AIR LIQUIDE SOCIETE ANONYME POUR L'ETUDE
ET L'EXPLOITATION DES PROCEDES GEORGES
CLAUDE 75, Quai d'Orsay
F-75321 Paris Cedex 07 (FR)**

EP 0 124 409 B1

Il est rappelé que : Dans un délai de neuf mois à compter de la date de publication de la mention de la délivrance du
brevet européen toute personne peut faire opposition au brevet européen délivré, auprès de l'Office européen des
brevets. L'opposition doit être formée par écrit et motivée. Elle n'est réputée formée qu'après paiement de la taxe
d'opposition (Art. 99(1) Convention sur le brevet européen).

**Description**

La présente invention concerne essentiellement l'épuration d'eaux usées, du genre mettant en œuvre un lit épurateur de particules solides fluidisées par l'eau en cours d'épuration, le cas échéant avec recyclage d'au moins une partie du courant d'eau de fluidisation, avec injection d'oxygène, de préférence dans le courant recyclé d'eau.

On a proposé d'effectuer (cf US-A-3 855 120 notamment) la régénération des particules par retrait de leur revêtement de matières biologiques en fin d'épuration par des moyens mécaniques faisant appel à différentes techniques tels des tamisages, des cyclones ou des chocs provenant d'organes rotatifs plus ou moins souples, avec des jets d'eau également. Cette façon de faire nécessite l'utilisation de moyens mécaniques relativement coûteux et délicats à mettre en œuvre et en outre risque de détériorer les particules par abrasage ou fracture.

L'objet de la présente invention est d'assurer une régénération d'un ensemble de particules solides revêtues d'un enrobage en matière biologique par élimination substantielle dudit enrobage en matière biologique, qui soit particulièrement simple et fiable et qui, de surcroît, assure une valorisation énergétique de la matière biologique ainsi dégagée. Selon l'invention, on assure une fermentation anaérobie de l'enrobage de telles particules en lit fluidisé dans un courant liquide ascendant, avec dégazage à une extrémité supérieure du lit d'un mélange gazeux composé essentiellement de méthane et de gaz carbonique résultant de ladite fermentation, et on récupère à une extrémité inférieure dudit lit les particules solides régénérées substantiellement libérées de leur enrobage en matière biologique. De la sorte, on évite à la fois la mise en œuvre de moyens mécaniques par la simple intervention d'une fermentation avec tous les avantages que cela comporte, notamment du point de vue de la récupération des gaz ainsi produits qui, en général, comportent un composant combustible relativement important.

L'invention concerne également un procédé d'épuration d'eaux usées, du genre mettant en œuvre un lit épurateur de particules solides fluidisées par l'eau en cours d'épuration, le cas échéant avec recyclage d'au moins une partie du courant d'eau de fluidisation, avec injection d'oxygène, de préférence dans le courant recyclé d'eau, du genre où on prélève des particules à enrobage biologique à une extrémité supérieure dudit lit pour les libérer de leur enrobage et les réinjecter ensuite dans le lit épurateur, caractérisé en ce que cette libération d'enrobage est assurée par une fermentation anaérobie en lit fluidisé dans un courant liquide ascendant, avec dégazage à une extrémité supérieure du lit d'un mélange gazeux composé essentiellement de méthane et de gaz carbonique, et en ce qu'on récupère à une extrémité inférieure dudit lit les particules solides régénérées substantiellement libérées de leur enrobage en matière biologique pour reconstituer ledit épurateur lit.

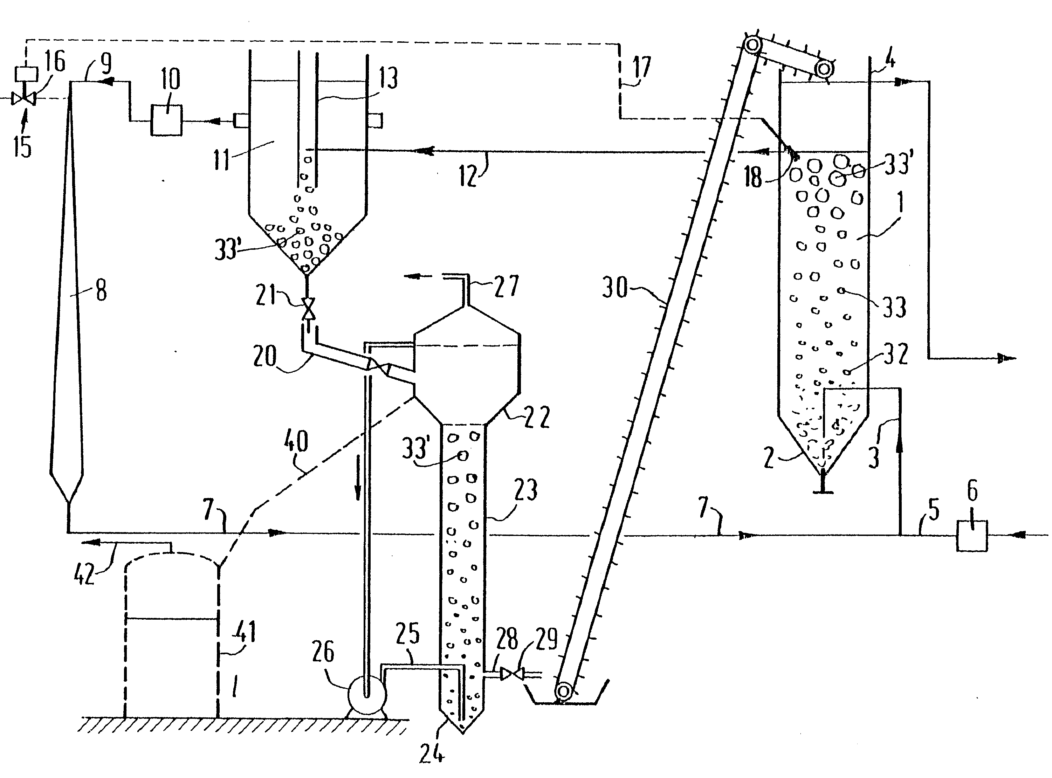

L'invention sera maintenant décrite en référence au dessin annexé dont la figure unique est une vue schématique d'une installation d'épuration d'eau mettant en œuvre l'invention.

En se référant au dessin, une installation d'épuration d'eau comporte essentiellement une colonne épuratrice 1 avec un fond de colonne 2 dans lequel débouchent un conduit d'alimentation en eau 3 et une extrémité supérieure de colonne 4 à ciel ouvert. Le conduit d'alimentation 3 réunit une conduite d'eau à épurer provenant d'un conduit 5 dans lequel cette eau circule par une pompe 6 et un débit d'eau de recyclage provenant d'une conduite 7 issue en cuve d'un dispositif d'oxygénation 8 en forme de bicône dans lequel l'eau recyclée pénètre en tête par une conduite 9 associée à un moyen de circulation 10 et cette conduite 9 prélève l'eau en position haute d'un décanteur 11 qui est alimenté en eau prélevée de la colonne 1 par une conduite 12 débouchant dans le décanteur 11 au milieu d'une cheminée axiale alimentatrice 13.

Le dispositif d'oxygénation 8 est associé à un moyen d'introduction d'oxygène 15 à vanne 16 dont l'obturateur est asservi par une commande 17 à un organe de mesure de la teneur en oxygène 18 dans la colonne de traitement 1.

L'extrémité inférieure du décanteur 11 est raccordée par un large conduit 20 à obturateur 21 à une enceinte de tête 22 d'une colonne auxiliaire de régénération 23 dont une extrémité inférieure 24 est raccordée par une conduite de recyclage 25 à pompe 26 prélevant un liquide de fluidisation, par exemple de l'eau, depuis l'enceinte de tête 22. L'enceinte de tête 22 est équipée d'une conduite de soutirage gazeux 27 tandis que l'extrémité inférieure 24 de la colonne auxiliaire 23 est raccordée par un large conduit 28 à vannes 29 à un moyen de réintroduction de particules 30 qui peut être un convoyeur vertical, pouvant être un hydroéjecteur utilisant l'eau traitée comme fluide porteur.

L'installation fonctionne de la façon suivante. De façon connue en soi, l'eau à épurer introduite dans l'installation par la canalisation 5 est mélangée avec un large débit d'eau recyclé par les conduites 7 et 9 et oxygénée par le dispositif 8 pour être introduite en cuve dans la colonne d'épuration 1, dans laquelle se développe sur un lit fluidisé 32 des particules 33 en fermentation aérobie. Il en résulte, de façon connue, un dépôt de micro-organismes à la périphérie extérieure des particules formant un enrobage en matière biologique et assurant le phénomène d'épuration. Bien entendu, il faut éliminer cet enrobage et, à cet effet, les particules ainsi enrobées, qui sont les plus légères et qui sont représentées en 33' à l'extrémité supérieure du lit sont entraînées par l'eau de recyclage vers le décanteur 11 où ces particules 33' se déposent en cuve du décanteur, tandis que l'eau de recyclage est transférée, via la conduite 9 et la pompe 10, vers le dispositif d'oxygénation 8. Les particules rassemblées en cuve du décanteur 11 sont prélevées de façon discontinue ou continue par la conduite 20 pour être amenées vers la conduite auxiliaire de fermentation anaérobie 23. Dans cette colonne 23, est établi également un lit de fluidisation de telles particules 33' par un courant d'eau recyclée véhiculée par la conduite 25 et la pompe 26 sans apport d'oxygène. Il en résulte, dans le lit fluidisé ainsi obtenu, une fermentation anaérobie qui transforme l'enrobage biologique en produits gazeux tels que le méthane et le gaz carbonique qui s'échappent par la conduite 27. Les particules ainsi libérées de leur enrobage voient donc leur densité augmenter et descendent progressivement en cuve 24 de la colonne 23 à partir de laquelle elles sont reprises de façon continue ou discontinue par la conduite 28 vers le moyen de convoyage 30 qui les réintroduit dans la colonne principale d'épuration d'eau.

Selon une variante de mise en œuvre, on prévoit pendant le traitement dans la colonne auxiliaire de régénération 23 un conduit d'extraction 40 des boues biologiques en tête de colonne vers un digesteur 41 où les boues ont le temps de se minéraliser complètement, en dégageant encore ici en 42 du gaz carbonique et du méthane.

**Revendications**

1. Procédé de régénération d'un ensemble de particules solides revêtues d'un enrobage en matière biologique par élimination substantielle dudit enrobage en matière biologique, caractérisé en ce qu'on assure une fermentation anaérobie de l'enrobage de telles particules en lit fluidisé dans un courant liquide ascendant, avec dégazage à une extrémité supérieure du lit d'un mélange gazeux composé essentiellement de méthane et de gaz carbonique résultant de ladite fermentation, et en ce qu'on récupère à une extrémité inférieure dudit lit les particules solides régénérées substantiellement libérées de leur enrobage en matière biologique.

2. Procédé de régénération selon la revendication 1, caractérisé en ce que le liquide est de l'eau qui est recyclée par pompe.

3. Installation de régénération pour la mise en œuvre selon l'une quelconque des revendications 1 à 2, caractérisée en ce qu'elle comporte une colonne avec une tête équipée d'une conduite de dégazage et un moyen de soutirage de particules en cuve, et des moyens d'admission de telles particules ainsi que des moyens pour faire circuler un liquide de fluidisation d'une extrémité inférieure vers une extrémité supérieure de colonne.

4. Installation de régénération selon la revendication 3, caractérisée en ce que le moyen d'admission des particules débouche dans la tête de dégazage.

5. Installation de régénération selon la revendication 3, caractérisée en ce que le moyen de circulation d'un liquide comporte également un moyen de recyclage de liquide d'une extrémité supérieure de colonne vers une extrémité inférieure de colonne.

6. Procédé d'épuration d'eaux usées, du genre mettant en œuvre un lit épurateur de particules solides fluidisées par l'eau en cours d'épuration, le cas échéant avec recyclage d'au moins une partie du courant d'eau de fluidisation, avec injection d'oxygène, de préférence dans le courant recyclé d'eau, du genre où on prélève des particules à enrobage biologique à une extrémité supérieure dudit lit pour les libérer de leur enrobage et les réinjecter ensuite dans le lit épurateur, caractérisé en ce que cette libération d'enrobage est assurée par une fermentation anaérobie en lit fluidisé dans un courant liquide ascendant, avec dégazage à une extrémité supérieure du lit d'un mélange gazeux composé essentiellement de méthane et de gaz carbonique, et en ce qu'on récupère à une extrémité inférieure dudit lit les particules solides régénérées substantiellement libérées de leur enrobage en matière biologique pour reconstituer ledit épurateur lit.

7. Procédé de régénération selon la revendication 1, caractérisé en ce qu'on soutire en tête de lit fluidisé des boues biologiques que l'on dirige vers un digesteur.

8. Installation d'épuration d'eaux usées, du genre comportant une colonne principale incorporant des particules solides avec une admission d'eau vers le bas et un soutirage vers le haut, le tout adapté pour un traitement aérobie en lit fluidisé, caractérisée par une conduite raccordant un soutirage haut à un décanteur équipé en tête d'une conduite de décharge d'eau et en cuve d'un conduit inférieur de soutirage de particules aboutissant en tête d'une colonne auxiliaire adaptée pour un traitement anaérobie desdites particules en lit fluidisé, dont la tête est équipée d'une conduite de dégazage, et dont la cuve comprend un moyen de soutirage de particules et de transfert vers ladite colonne principale, ainsi que des moyens pour faire circuler un liquide de fluidisation d'une extrémité inférieure vers une extrémité supérieure de ladite colonne auxiliaire.

9. Installation d'épuration d'eaux usées selon la revendication 8, caractérisée en ce qu'elle comprend une conduite de raccordement entre le haut du décanteur et un moyen d'oxygénation d'eau, dont la sortie est raccordée en cuve de la colonne principale.

10. Installation d'épuration d'eaux usées selon la revendication 9, caractérisée en ce qu'elle comporte un conduit de raccordement entre la tête de la colonne auxiliaire et un digesteur.

**Claims**

1. Process for the regeneration of solid particles covered by a wrapping of a biomass by substantial elimination of said wrapping of biomass, characterized in that one carries out an anaerobic fermentation of the wrapping of these particles in a fluidized bed in an ascendent liquid stream with degasification of a gaseous mixture composed essentially of methane and carbon-dioxide resulting from said fermentation at an upper extremity of the bed, and that one recovers the solid regenerated particles substantially freed from their wrapping of biomass at a lower extremity of said bed.

2. Process of regeneration according to claim 1, characterized in that the liquid is water which is recycled by a pump.

3. Apparatus of regeneration for the use according to one of the claims 1 and 2, characterized in that it comprises a column with a head equipped with a degasing conduit and a means for withdrawal of particles in the sump and means for admission of these particles as well as means for circulating a liquid of fluidization from a lower extremity to an upper extremity of the column.

4. Apparatus of regeneration according to claim 3, characterized in that the means for admission of the particles opens into the head of degasification.

5. Apparatus of regeneration according to claim 3, characterized in that the means of circulation of a liquid comprises also means of recycling a liquid from an upper extremity of the column to a lower extremity of the column.

6. Process for purifying waste waters by means of a purifier bed of solid particles fluidized by water during the purification, optionally with recycling at least a portion of the water stream of fluidization, with injection of oxygen, preferably into the recycled water stream, by withdrawing particles with biological wrapping at an upper extremity of said bed to free them from their wrapping and then to reinject them into the purifier bed, characterized in that this freeing from the wrapping is carried out by an anaerobic fermentation in the fluidized bed in an ascendent liquid stream with degasification of a gaseous mixture comprising essentially methane and carbon dioxide at an upper extremity of the bed, and that one recovers the regenerated solid particles substantially freed from their wrapping of biomass at the lower extremity of said bed to restore said purifier bed.

7. Process of regeneration according to claim 1, characterized in that one withdraws biological sludge at the head of the fluidized bed which sludge is directed to a digester.

8. Apparatus for purifying waste waters comprising a main column containing solid particles with a lower admission of water and an upper withdrawal adapted for an aerobic treatment in a fluidized bed, characterized by a conduit connecting a high withdrawal with a settling tank equipped at the head with conduit of discharge of water and in the sump with a lower conduit of particle withdrawal connected with the head of an auxiliary column adapted for an anaerobic treatment of said particles in a fluidized bed, the head of which is equipped with a degasification conduit and the sump of which comprises means of particle withdrawals and of transfer to said main column, as well means for circulation of a liquid of fluidization from a lower extremity to an upper extremity of said auxiliary column.

9. Apparatus for purification of waste waters according to claim 8, characterized in that it comprises a conduit of connection between the upper part of the settling tank and a means of oxigenation of water the exit of which is connected with the sump of the main column.

10. Apparatus for purification of waste waters according to claim 9, characterized in that it comprises a conduit of connection between the head of the auxiliary column and the settling tank.

**Patentansprüche**

1. Verfahren zur Regenerierung von mit einer Umhüllung aus biologischem Material bedeckten festen Teilchen durch wesentliche Entfernung dieser Umhüllung von biologischem Material, dadurch gekennzeichnet, daß man eine anaerobe Fermentation der Umhüllung dieser Teilchen in einer fluidisierten Schicht in einem aufsteigenden flüssigen Strom unter Gasabscheidung eines im wesentlichen aus Methan und Kohlendioxid zusammengesetzten gasförmigen Gemisches, das aus dieser Fermentation stammt, an einem oberen Ende der Schicht durchführt und daß man an einem unteren Ende dieser Schicht die regenerierten festen Teilchen, die im wesentlichen von ihrer Umhüllung aus biologischem Material befreit sind, gewinnt.

2. Verfahren zur Regenerierung nach Anspruch 1, dadurch gekennzeichnet, daß die Flüssigkeit Wasser ist, das durch eine Pumpe rückgeführt wird.

3. Regeneriervorrichtung zur Anwendung nach einem der Ansprüche 1 und 2, dadurch gekennzeichnet, daß sie eine Säule mit einem Kopf, der mit einer Entgasungsleitung versehen ist, und eine Einrichtung zum Abziehen von Teilchen in der Wanne und eine Einrichtung zur Einführung dieser Teilchen sowie eine Einrichtung zum Zirkulierenlassen einer Fluidisierflüssigkeit von einem unteren Ende zu einem oberen Ende der Säule aufweist.

4. Regeneriervorrichtung nach Anspruch 3, dadurch gekennzeichnet, daß die Einrichtung zum Einführen der Teilchen in den Entgasungskopf mündet.

5. Regeneriervorrichtung nach Anspruch 3, dadurch gekennzeichnet, daß die Einrichtung zur Zirkulation einer Flüssigkeit auch eine Einrichtung zur Flüssigkeitsrückführung von einem oberen Ende der Säule zu einem unteren Ende der Säule aufweist.

6. Verfahren zur Reinigung von Abwässern unter Anwendung einer Reinigerschicht fester, durch Wasser im Verlauf der Reinigung fluidisierter Teilchen, gegebenenfalls unter Rückführung wenigstens eines Teils des Fluidisierwasserstromes, unter Sauerstoffeinspritzung, vorzugsweise in den rückgeführten Wasserstrom, derart, daß man die Teilchen mit biologischer Umhüllung von einem oberen Ende der Schicht abnimmt, um sie von ihrer Umhüllung zu befreien und sie sodann in die Reinigerschicht wieder einzuspritzen, dadurch gekennzeichnet, daß die Befreiung von der Umhüllung durch eine anaerobe Fermentation in fluidisierter Schicht in einem aufsteigenden flüssigen Strom unter Gasabscheidung eines im wesentlichen aus Methan und Kohlendioxid bestehenden gasförmigen Gemisches an einem oberen Ende der Schicht erfolgt und daß man an einem unteren Ende dieser Schicht die festen regenerierten Teilchen, die im wesentlichen von ihrer Umhüllung aus biologischem Material befreit sind, gewinnt, um die besagte Reinigerschicht wieder herzustellen.

7. Verfahren zur Regenerierung nach Anspruch 1, dadurch gekennzeichnet, daß man am Kopf der fluidisierten Schicht biologischen Schlamm abzieht, den man zu einem Faulbehälter führt.

8. Vorrichtung zur Reinigung von Abwässern mit einer feste Teilchen enthaltenden Hauptsäule mit einem unteren Wassereintritt und einem oberen Abziehen für eine aerobe Behandlung in fluidisierter Schicht, gekennzeichnet durch eine Leitung, die eine obere Entnahme mit einem Klärbehälter verbindet, der am Kopf mit einer Wasserentnahmeleitung und in der Wanne mit einer unteren Teilchentnahmeleitung versehen ist, die auf den Kopf einer Hilfssäule trifft, die für eine anaerobe Behandlung dieser Teilchen in fluidisierter Schicht ausgebildet ist, deren Kopf mit einer Entgasungsleitung versehen ist und deren Wanne eine Einrichtung für den Abzug von Teilchen und deren Überführung zu der Hauptsäule aufweist, sowie Einrichtungen zum Zirkulierenlassen einer Fluidisierflüssigkeit von einem unteren Ende zu einem oberen Ende der besagten Hilfssäule.

9. Vorrichtung zur Reinigung von Abwässern nach Anspruch 8, dadurch gekennzeichnet, daß sie eine Verbindungsleitung zwischen dem oberen Teil des Klärbehälters und einer Wasseroxidationseinrichtung aufweist, deren Ausgang mit der Wanne der Hauptsäule verbunden ist.

10. Vorrichtung zur Reinigung von Abwässern nach Anspruch 9, dadurch gekennzeichnet, daß sie eine Verbindungsleitung zwischen dem Kopf der Hilfssäule und einem Faulbehälter aufweist.